(19) Europäisches Patentamt

European Patent Office

Office européen des brevets

(11) Veröffentlichungsnummer: **0 232 898 B1**

(12) **EUROPÄISCHE PATENTSCHRIFT**

(45) Veröffentlichungstag der Patentschrift: 17.04.91

(51) Int. Cl.⁵: **B62D 53/12**

(21) Anmeldenummer: 87101812.3

(22) Anmeldetag: 10.02.87

(54) **Kupplungseinrichtung bei Kraftfahrzeugen (Stichwort: Fernsteuerung für Anhängerkupplung mit Tipp-Betätigung).**

(30) Priorität: 10.02.86 DE 3604185

(43) Veröffentlichungstag der Anmeldung:
19.08.87 Patentblatt 87/34

(45) Bekanntmachung des Hinweises auf die Patenterteilung:
17.04.91 Patentblatt 91/16

(84) Benannte Vertragsstaaten:
**DE FR IT NL**

(56) Entgegenhaltungen:
**DE-A- 3 018 905**
**US-A- 3 697 974**
**US-A- 3 889 979**

**Prospekt "Vollautomatische Sattelküpplung Typ 64M" der Fa. Rockinges (Anmelder)**

(73) Patentinhaber: **ROCKINGER Spezialfabrik für Anhängerkupplungen GmbH & Co.**
**Waldmeisterstrasse 80 Postfach 45 04 64**
**W-8000 München 45(DE)**

(72) Erfinder: **Glässner, Ralf, Dipl.-Ing.**
**Schweidnitzer Strasse 41**
**W-8000 München 50(DE)**
Erfinder: **Breu, Johann**
**Allgäuer Strasse 7**
**W-8000 München 71(DE)**
Erfinder: **Raaber, Alfons**
**Riemerschmidstrasse 9**
**W-8000 München 45(DE)**

(74) Vertreter: **Weickmann, Heinrich, Dipl.-Ing. et al**
**Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820**
**W-8000 München 86(DE)**

**Beschreibung**

Die Erfindung betrifft eine Ankupplungseinrichtung bei Kraftfahrzeugen zum Ankuppeln eines Nachlauffahrzeuges an ein Zugfahrzeug, insbesondere Anhängerkupplung oder Sattelkupplung, welche durch äußere Krafteinwirkung los Bar und durch Annäherung von Kupplungseinrichtungsteilen der beiden zu kuppelnden Fahrzeuge einzukuppeln ist, wobei fur Einleitrung des Auskuppeln der Ankupplungseinrichtung ein Kraftgerät vorgesehen ist und wobei zum Aktivieren des Kraftgerätes eine Fernbedienungseinrichtung mit einem Handbetätigungsorgan vorgesehen ist.

Eine solche Ankupplungseinrichtung ist aus einem Prospekt "Vollautomatische Sattelkupplung Typ 64 M" der Firma Rockinger bekannt.

Bei der bekannten Ankupplungseinrichtung ist zum Auskuppeln der Ankupplungseinrichtung ein Zugschalter vorgesehen, der solange festzuhalten ist, bis die Kupplung ausgekuppelt hat.

Sowohl bei Anhängerkupplungen als auch bei Sattelkupplungen kann es nun vorkommen, daß die Ankupplungseinrichtung zu dem Zeitpunkt, zu dem ausgekuppelt wird, durch das Nachlauffahrzeug blockiert ist desart, daß das Kraftgerät den Zustand "ausgekuppelt" nicht herbeiführen Kann. In diesem Fall ist der Fahrer gezwungen, eine geringe Vor- und/oder Rückwärtsbewegung des Zugfahrzeuges einzuleiten, damit die das Auskuppeln Berwirkende Blockierung aufgehoben wird. Hierzu wäre es zweckmäßig, wenn der Fahrer beide Hände zur Einleitung des Fahrvorganges zur Verfügung hätte.

Der Erfindung liegt deshalb die Aufgabe zugrunde, eine Ankupplungseinrichtung gattungsgemäßer Art so auszubilden, daß der Fahrer beide Hände zur Einleitung von Vorund/oder Rückwärtsbewegungen des Zugfahrzeuges zur Verfügung hat, wenn er die Auskupplungseinleiton will, aber durch eine Wechselwirkung zwischen Zugfahrzeug und Nachlauffahrzeug zestrindest ist.

Zur Lösung dieser Aufgabe wird erfindungsgemäß vorgeschlagen, daß ein den Zustand "ausgekuppelt" der Ankupplungseinrichtung erfassender Auskupplungssensor vorgesehen ist, sind daß die Fernbedienungseinrichtung selbsthaltend in dem Sinne ausgebildet ist, daß sie unabhängig von der Handbetätigung des Handbetätigungsorgans aktiviert bleibt und die Kraftwirkung des Kraftgerätes im Kupplelungslosessinn aufrechterhält, bis der Auskupplungssensor den Zustand "ausgekuppelt" der Ankupplungseinrichtung ermittelt,

Bei der erfindungsgemäßen Ausbildung braucht der Fahrer das Handbetätigungsorgan nur "anzutippen" und kann dann, wenn nicht sogleich ausgekuppelt wird, eine Vor- und/oder Rückwärtsbewegung des Zugfahrzeuges einleiten, bis die Wechselwirkung zwischen Zugfahrzeug und Nachlauffahrzeug aufhört und das Kraftgerät dann den Auskupplungsvorgang durchführen kann. Nach einer Weiterbildung der Erfindung ist vorgesehen , daß die Fernbedienungseinrichtung mit einem Melder gekoppelt ist, welcher durch den Auskupplungssensor gesteuert den Eintritt des Zustands "ausgekuppelt" meldet.

Beispiels weise ist die Fernbedienungseinrichtung mit einem Aktivierungsmelder gekoppelt welcher ein Aktivierungsmeldesignal liefert vom Zeitpunkt des Aktivierungsbeginns des Handbetätigungsorgans bis zu dem Zeitpunkt, zu dem der Auskupplungssensor den Zustand "ausgekuppelt" der Ankupplungseinrichtung ermittelt.

Dam ist der Fahrer durch den Aktivierungsmelder darauf hingewiesen, daß er einen Auskupplungsvorgang eingeleitet hat, solange, bis der Auskupplungsvorgang beendet ist. Es besteht also dank des Aktiverungsmeldesignals keine Gefahr, daß der Fahrer etwa nach Antippen des Handbetätigungsorgans der Fernbedienungseinrichtung ohne Rücksicht auf den eingeleiteten Auskupplungsvorgang losfährt mit der Folge, daß der eingeleitete Auskupplungsvorgang bei fahrendem Zugfahrzeug im Augenblick eines Lastwechsels vollendet werden könnte und sich das Nachlauffahrzeug dann vom Zugfahrzeug zum unrichtigen Zeitpunkt und am unrichtigen Ort löst.

Es sei hier erwähnt, daß man das Handbetätigungsorgan entweder in Reichweite des Fahrers anbringen kann, mit der Folge, daß der Fahrer den Auskupplungsvorgang von seinem Fahrersitz aus einleiten kann. Es ist aber denkbar, daß man aus Gründen höchster Sicherheit das Handbetätigungsorgan auch außerhalb des Führerhauses oder jedenfalls an einem Ort anbringen kann, den der Fahrer in der normalen Sitzstellung im Führerhaus nicht erreichen kann, so daß das handbetätigungsorgan von einem zweiten Mann oder von dem Fahrer nach Aussteigen betätigt werden muß. Dies hat im Falle des zweiten Mannes den Sicherheitsvorzug, daß der Fahrer dann keinesfalls zum falschen Zeitpunkt, also etwa während der Fahrt, durch Unachtsamkeit auf das Handbetätigungsorgan einwirkt und damit einen Auskupplungsvorgang einleitet, Auch in diesem Fall ist die erfindungsgemäße Ausbildung der Fernbedienungseinrichtung als selbsthaltend von großem Vorteil, wobei dann der zweite Mann, der die Fernbedienungseinrichtung durch Einwirkung auf das Handbetätigungsorgan betätigt, unmittelbar nach erfolgter Betätigung von dem Zugfahrzeug zurücktreten kann und daher außer Gefahr ist, überfahren zu werden. Diese Gefahr bestünde, wenn der zweite Mann auf das Handbetätigungsorgan einwirken müßte, bis der Zustand "ausgekuppelt" erreicht ist.

Das Handbetätigungsorgan kann als ein monostabiles Handbetätigungsorgan, zum Beispiel in Form eines Druckknopfes ausgebildet sein, der zur Aktivierung des Kraftgeräts nur einmal kurz angetippt zu werden braucht.

Die Fernbedienungseinrichtung kann mit einem Anzeigesystem ausgerüstet sein, etwa in der Weise, daß ein Einkupplungsmelder vorgesehen ist, welcher ein Einkupplungsmeldesignal liefert, wenn ein Einkupplungssensor den Zustand "eingekuppelt" und - gegebenenfalls - "verriegelt" ermittelt, und daß ferner ein Auskupplungsmelder vorgesehen ist, welcher ein Auskupplungsmeldesignal liefert, wenn der Auskupplungssensor den Zustand "ausgekuppelt" ermittelt. Ein solches Anzeigesystem wird zweckmäßigerweise im Sicht- oder Hörfeld des Fehrers angebracht. Der Fahrer hat durch dieses Anzeigesystem die Mög lichkeit, bei beabsichtigtem Start des Fahrzeugs den Kupplungszustand zu überprüfen, und zwar gleichgültig, ob er bei angehängtem Anhänger nur anfahren will oder ob er einen Auskupplungs- oder Einkupplungsvorgang einleiten und nach dessen Beendigung überprüfen will.

Wenn ein Einkupplungsmelder und ein Auskupplungsmelder vorhanden ist, so können diese Melder als Meldelampen ausgeführt sein, von denen bei ordnungsgemäßem Zustand der Anlage in beiden Zuständen "eingekuppelt" und "ausgekuppelt" der Ankupplungseinrichtung jeweils eine brennt und die andere nicht brennt. Diese Ausbildung des Anzeigesystems schafft eine zusätzliche Sicherheit insofern, als immer eine der Lampen brennen und die andere erlöscht sein muß. Brennen beide Lampen oder sind beide Lampen erlöscht, so erfährt der Fahrer daraus, daß an der Fernbedienungseinrichtung und/oder dem Anzeigesystem und/oder dem Kraftgerät und/oder der Kupplung etwas nicht in Ordnung ist. Ein Beispiel: Wenn der Einkupplungsmelder durch eine Störgröße, etwa einen Fremdkörper "eingekuppelt" anzeigt, in Wirklichkeit aber nicht eingekuppelt ist, sondern ausgekuppelt, so brennen beide Lampen, sowohl des Einkupplungsmelders als auch des Auskupplungsmelders. Damit erfährt der Fahrer, daß er die Anlage überprüfen muß. Wäre nur ein Kupplungsmelder vorhanden, so würde in diesem Fall der Fahrer sich auf den einen Einkupplungsmelder verlassen müssen und würde losfahren, obwohl in Wirklichkeit ausgekuppelt ist. Die erfindungsgemäße Anbringung sowohl eines Einkupplungsmelders als auch eines Auskupplungsmelders schafft also einen Vorteil erhöhter Sicherheit, auch wenn die Fernbedienungseinrichtung nicht entsprechend dem kennzeichnenden Teil des Anspruches I ausgebildet ist.

Man könnte die Fernbedienungseinrichtung grundsätzlich durch das Zündschloß des Kraftfahrzeuges ein- und ausschalten, das heißt, kupplungsbereit machen. Vorzugsweise sieht man jedoch einen von dem Zündschloß des Kraftfahrzeugs unabhängigen Hauptschalter für die Fernbedienungseinrichtung vor, so daß die Fernbedienungseinrichtung immer nur dann auskuppelbereit ist, wenn ihr Hauptschalter eingeschaltet ist. Dies hat den Sicherheitsvorteil, daß eine unbeabsichtigte Betätigung des Handbetätigungsorgans etwa während der Fahrt nicht zu einem Auskuppeln führen kann.

Es empfiehlt sich, den Aktivierungsmelder von dem Hauptschalter unabhängig zu machen in dem Sinne, daß er nach eingeleiteter, aber nur teilweise erfolgter Auskupplung, etwa nach bloßer Entriegelung, auch bei ausgeschaltetem Hauptschalter weiterhin das Aktivierungsmeldesignal liefert. Auf diese Weise wird verhindert, daß ein unzuverlässiger Fahrer nach einmal erfolgter Einleitung eines Auskupplungsvorgangs, der etwa wegen Zugbelastung zwischen Fahrzeug und Nachlauffahrzeug nicht vollendet werden kann, zur Unterdrückung der Aktivierungsanzeige einfach den Hauptschalter ausschaltet und dann losfährt. Wenn er dies nämlich tut, so läuft das Aktivierungsmeldesignal des Ankupplungsmelders weiter und der Fahrer wird erinnert, daß er nicht einfach losfahren darf, sondern den Auskupplungsvorgang beispielsweise durch Vor- und Zurückstoßen des Zugfahrzeugs bis zum Lastwechsel vollständig ablaufen lassen muß.

Der Aktivierungsmelder, der die Einleitung des Auskuppelvorgangs anzeigt und solange meldet, bis der Auskupplungsvorgang beendet ist, kann optische und/oder akustische Signale liefern. Die Kombination eines optischen und eines akustischen Signals wird aus Sicherheitsgründen bevorzugt.

Eine aus Sicherheitsgründen vorteilhafte Weiterbildung besteht darin, daß der Einkupplungsmelder und der Auskupplungsmelder von der Fernbedienungseinrichtung insoweit getrennt oder trennbar sind, daß eine Überprüfung des Kupplungszustandes möglich ist, ohne daß gleichzeitig die Fernbedienungseinrichtung aktivierbar ist. Diese Ausgestaltung hat den Vorteil, daß bei einer Überprüfung des Kupplungszustandes durch den Fahrer ein fern vom Führersitz angebrachtes Betätigungsorgan für die Fernbedienungseinric htung, wenn es, etwa durch einen zweiten Mann, absichtlich oder unabsichtlich betätigt wird, nicht zu der Einleitung eines Auskupplungsvorganges führen kann, während oder nachdem der Fahrer den Zustand "eingekuppelt" festgestellt hat. Die Trennbarkeit der Einkupplungs- und Auskupplungsmelder von der Bedienungseinrichtung kann etwa dadurch ermöglicht werden, daß der Hauptschalter ein Drei-Positionen-Schalter ist, welcher in einer ersten Position die Aktivierung der Fernbedienungseinrichtung und gleichzeitig die Überprüfung des Kupplungszustandes ("eingekuppelt" oder "ausgekuppelt") ermöglicht, in einer zweiten Position lediglich die Überprüfung des Kupplungszustandes ("ausgekuppelt" oder "eingekuppelt") ermöglicht, und in einer dritten Position sowohl die Fernbedienungseinrichtung als auch die Überprüfung des Kupplungszustandes ("eingekuppelt" oder "ausgekuppelt") unterdrückt. Bei einer solchen Ausbildung wird der Fahrer die erste Position des Hauptschalters wählen, wenn er auskuppeln will; er wird die zweite Position wählen, wenn er lediglich den Kupplungszustand überprüfen will, und er wird die dritte Position wählen, bevor er nach Auskupplung oder Überprüfung losfährt.

Das Kraftgerät wird bevorzugt als pneumatisches Kraftgerät ausgerüstet, wenn das Zugfahrzeug ohnehin mit einer Druckluftanlage ausgerüstet ist.

Als Sensoren kommen mechanische Berührungsschalter, insbesondere aber kapazitive oder induktive Näherungsschalter infrage, die den Vorteil größerer Beschädigungsunanfälligkeit besitzen.

Die Fernbedienungseinrichtung könnte grundsätzlich als Elektronik aufgebaut werden. Im Hinblick auf den rauhen Betrieb empfiehlt es sich allerdings, daß die Fernbedienungseinrichtung mit einer elektrischen Relaisschaltung aufgebaut ist, mit einem Selbsthalterelais, welches bei kurzzeitiger Betätigung des Betätigungsorgans in den Selbsthaltezustand übergeht und damit die Aktivierung der Fernbedienungseinrichtung aufrechterhält, wobei in einem Selbsthaltekreis des Selbsthalterelais ein durch ein weiteres Relais betätigter Schalter liegt, der bei Ermittlung des Zustandes "ausgekuppelt" durch den Auskupplungssensor den Selbsthaltekreis unterbricht.

Ankupplungseinrichtungen werden - und dies gilt sowohl für Anhängerkupplungen als auch für Sattelkupplungen - in der Regel mit einem Verriegelungselement ausgeführt. Im Falle einer solchen Ausführung wird man das Kraftgerät zeitlich nacheinander zuerst das Verriegelungselement lösen lassen und hierauf das Kupplungselement in eine Stellung "ausgekuppelt" überführen lassen; dabei empfiehlt es sich, den Einkupplungssensor auf die Stellung des Verriegelungselements ansprechen zu lassen, so daß die Anzeige "eingekuppelt" bereits dann verschwindet, wenn das Verriegelungselement aus der Verriegelungsstellung ausgerückt ist; den Auskupplungssensor wird man zweckmäßig auf die Stellung des Kupplungselements ansprechen lassen.

Wie an sich bekannt, kann die Kupplungseinrichtung in dem Zustand "ausgekuppelt" verrastbar oder durch Reibungskräfte stabilisiert sein, so daß das Kraftgerät in eine Ruhestellung zurückführbar ist, sobald der Auskupplungssensor den Zustand "ausgekuppelt" ermittelt. Man braucht also nicht abzuwarten, bis wieder eingekuppelt wird; die Bedienungseinrichtung und das Kraftgerät können vielmehr bereits nach vollständig erfolgtem Auskuppeln in eine Bereitschaftsstellung zurückkommen, aus der heraus zu einem späteren Zeitpunkt ein erneutes Auskuppeln möglich ist.

Die Erfindung betrifft weiter eine Ankupplungseinrichtung bei Kraftfahrzeugen zum Ankuppeln eines Nachlauffahrzeugs an ein Zugfahrzeug, insbesondere Anhängerkuppung oder Sattelkupplung, welche durch äußere Krafteinwirkung los bar und durch Annäherung von Kupplungseinrichtungsteilen der beiden zu kuppelnden Fahrzeuge einzukuppeln ist, wobei zum Auskuppeln der Ankupplungseinrichtung eine zur ausübung einer Betätigungskraft auf die Ankupplungseinrichtung ausgebildete Fernbedienungseinrichtung mit einem Handbetätigungsorgan vorgesehen ist. Um dem Fahrer die Möglichkeit zu geben, bei beabsichtigtem Start des Fahrzeugs den Kupplungszustand zu überprüfen, und zwar gleichgültig, ob er bei angehängtem Anhänger nur anfahren will oder ob er einen Auskupplungs- oder Einkupplungsvorgang einleiten und nach dessen Beendigung überprüfen Will, wird dabei vorgeschlagen, daß ein Einkupplungsmelder ist, welcher ein Einkupplungsmeldesignal liefert, wenn ein Einkupplungssensor den Zustand "eingekuppelt" und - gegebenenfalls - "verriegelt" ermittelt, und daß ferner ein Auskupplungsmelder vorgesehen ist, welcher ein Auskupplungsmeldesignal liefert, wenn der Auskupplungssensor den Zustand "ausgekuppelt" ermittelt.

Dabei wird weiter empfohlen, daß der Einkupplungsmelder und der Auskupplungsmelder Meldelampen sind, von, denen bei ordnungsgemäßem Zustand der Anlage in beiden Zuständen "eingekuppelt" und "ausgekuppelt" der Ankupplungseinrichtung jeweils eine brennt und die andere nicht brennt. Diese Ausbildung des Anzeigesystems schafft eine zusätzliche Sicherheit insofern, als immer eine der Lampen brennen und die andere erlöscht sein muß. Brennen beide Lampen oder sind beide Lampen erlöscht, so erfährt der Fahrer daraus, daß an der Fernbedienungseinrichtung und/oder dem Anzeigesystem und/oder dem Kraftgerät und/oder der Kupplung etwas nicht in Ordnung ist.

Die beiliegenden Figuren erläutern die Erfindung anhand eines Ausführungsbeispiels. Es stellen dar:

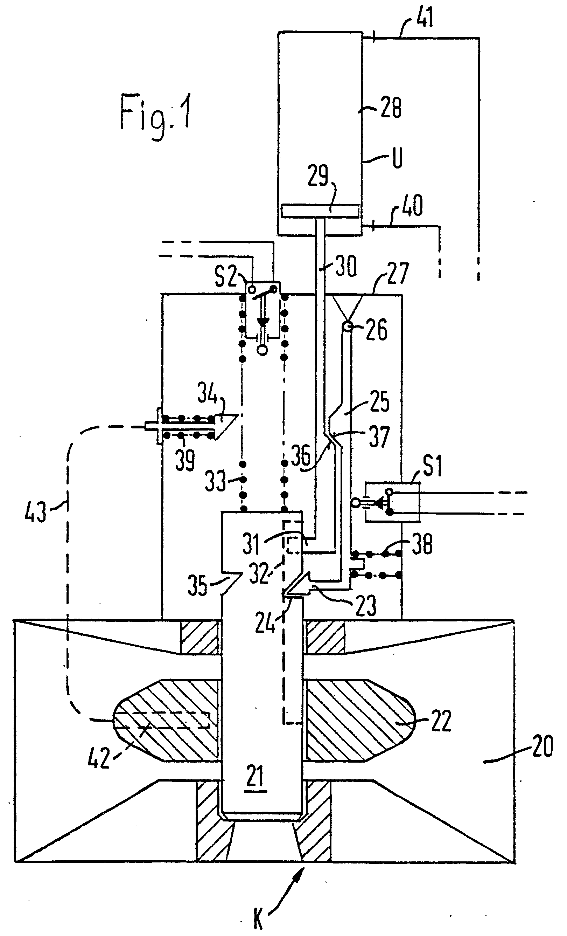

Figur 1 eine Anhängerkupplung mit einem Kraftgerät, einem Einkupplungssensor und einem Auskupplungssensor;

Figur 2 eine Fernbedienungs- und Anzeige-Einrichtung bei einer im Zustand "eingekuppelt" befindlichen Ankupplungseinrichtung gemäß Figur 1 mit ausgeschaltetem Zündschloß und offenem Hauptschalter;

Figur 3 die Fernbedienungs- und Anzeige-Einrichtung gegemäß Figur 2 bei eingeschaltetem Zündschloß und geschlossenem Hauptschalter im Zustand "eingekuppelt"

Figur 4 die Fernbedienungs- und Anzeige-Einrichtung bei eingeschaltetem Zündschloß und geschlossenem Hauptschalter sowie gerade betätigtem Betätigungsorgan im Zustand "eingekuppelt" beziehungsweise teilweise "ausgekuppelt";

Figur 5 die Fernbedienungs- und Anzeigeeinrichtung bei eingeschaltetem Zündschloß und geschlossenem Hauptschalter nach Loslassen des Handbetätigungsorgans im Zustand "ausgekuppelt";

Figur 6 die Fernbedienungs- und Anzeigeeinrichtung bei eingeschaltetem Zündschloß und geschlossenem Hauptschalter im Zustand "ausgekuppelt" nach Rückkehr des Kraftgerätes in seine Ruhestellung.

Figur 7 eine abgewandelte Ausführungsform der Fernbedienungs- und Anzeigeeinrichtung, bei welcher eine Überprüfung des Kupplungszustandes möglich ist, ohne daß die Fernbedienungseinrichtung auskupplungsbereit wird.

In Figur I erkennt man eine Anhängerkupplung, die ganz allgemein mit "K" bezeichnet wird. Es handelt sich um eine übliche Anhängerkupplung mit einem Kupplungsmaul 2O und einem Kupplungsbolzen 2l. Der Kupplungsbolzen 2l ist zum Zusammenwirken mit einer Kupplungsöse 22 der Zugdeichsel eines Nachlauffahrzeuges bestimmt, wenn die Anhängerkupplung K an einem Zugfahrzeug angebracht ist. Der Kupplungsbolzen 2l befindet sich in Figur I in der Stellung "eingekuppelt". Dem Kupplungsbolzen 2l ist ein Verriegelungselement 23 zugeordnet, das in eine Verriegelungskerbe 24 des Kupplungsbolzens 2l eingreift, wenn der Kupplungsbolzen 2l in dem Zustand "eingekuppelt" sich befindet. Es ist zu bemerken, daß sich das Verriegelungselement 23 und die Verriegelungskerbe 24 in einer anderen Ebene befinden als der Auskupplungsvorsprung 3l und die Auskupplungskerbe 32. Das Verriegelungselement 23 ist an einem Schwenkhebel 25 angebracht, der bei 26 an dem Gehäuse 27 einer Kupplungsautomatik schwenkbar gelagert ist, wobei das Gehäuse 27 mit dem Kupplungsmaul 2O fest verbunden ist. An dem Gehäuse 27 ist ferner ein Kraftgerät U angebracht, welches einen an dem Gehäuse 27 starr angebrachten Zylinder 28 und einen Kolben 29 umfaßt. Der Kolben 29 ist über eine Kolbenstange 3O mit einem Auskupplungsvorsprung 3l verbunden, der in eine Auskupplungskerbe 32 des Kupplungsbolzens 2l eingreift. Der Kupplungsbolzen 2l ist durch eine Hauptfeder 33 in die Stellung "eingekuppelt" vorgespannt und kann durch den Auskupplungsvorsprung 3l in eine engehobene Stellung "ausgekuppelt" angehoben werden. Zur Arretierung des Kupplungsbolzens 2l in der Stellung "ausgekuppelt" ist ein Verrastungselement 34 vorgesehen, welches in der Stellung "ausgekuppelt" des Kupplungsbolzens in eine Verrastungskerbe 35 des Kupplungsbolzens 2l eingreift.

An der Kolbenstange 3O ist eine Nockenfläche 36 angebracht, welche mit einer Gegennockenfläche 37 des Schwenkhebels 25 zusammenwirkt. Der Auskupplungsvorsprung 3l hat Spiel gegenüber der Auskupplungskerbe 32 des Kupplungsbolzens 2l. Wenn zum Auskuppeln der Kolben 29 mit der Kolbenstange 3O hochfährt, so wird zunächst das Verriegelungselement 23 durch die Zusammenwirkung der Nockenfläche 36 und der Gegennockenfläche 37 im Gegenzeigersinn gegen die Wirkung einer ersten Hilfsfeder 38 ausgeschwenkt. Die Ausschwenkung ist beendet, wenn der Auskupplungsvorsprung 3l sein Spiel innerhalb der Auskupplungskerbe 32 durchlaufen hat, so daß danach der Kupplungsbolzen 2l - von dem Verriegelungselement 23 nunmehr freigegeben - nach oben in die Stellung "ausgekuppelt" mitgenommen werden kann.

In der Stellung "ausgekuppelt" rastet das Verrastungselement 34 unter der Wirkung einer weiteren Hilfsfeder 39 in die Verrastungskerbe 35 des Kupplungsbolzens 2l ein, so daß dieser in der Stellung "ausgekuppelt" verrastet ist. Das Auskuppeln erfolgt dadurch, daß Druckluft über eine Leitung 4O an die Unterseite des Kolbens 29 gegeben wird, während die Leitung 4l mit Atmosphäre verbunden ist.

Wenn der Kupplungsbolzen sich im Zustand "eingekuppelt" befindet, so ist ein Einkupplungssensor, nämlich Näherungsschalter S l geschlossen und ein Auskupplungssensor, nämlich Näherungsschalter S 2 geöffnet. Wenn der Kupplungsbolzen 2l sich in der Stellung "ausgekuppelt" befindet, so ist der Näherungsschalter S l geöffnet und der Näherungsschalter S 2 geschlossen. Sobald der Kupplungsbolzen 2l in der Stellung "ausgekuppelt" durch das Verrastungselement 34 und die Verrastungskerbe 35 verrastet ist, kann der Kolben 29 durch Druckluftgabe über die Leitung 4l und Entlüftung über die Leitung 4O nach unten in die Stellung gemäß Figur I zurückbewegt werden, ohne daß der Kupplungsbolzen 2l sich aus der Stellung "ausgekuppelt" entfernt. Hierzu ist die Auskupplungskerbe 32 entsprechend lang bemessen. Wenn die Zugöse 22 eingekuppelt werden soll, so stößt man mit dem Zugfahrzeug rückwärts, so daß die Zugöse 22 in das Kupplungsmaul 2O eindringt. Dabei stößt die Kupplungsöse 22 auf einen Lösehebel 42, der über eine Übertragungseinrichtung 43 mit dem Verrastungselement 34 verbunden ist. Der Lösehebel 42 veranlaßt beim Auftreffen der Kupplungsöse 22 ein Zurückziehen des Verrastungselements 34 nach links, so daß der Kupplungsbolzen 2l unter der Wirkung der Hauptfeder 33 in die Stellung "eingekuppelt" zurückfallen kann, die in Figur I gezeichnet ist.

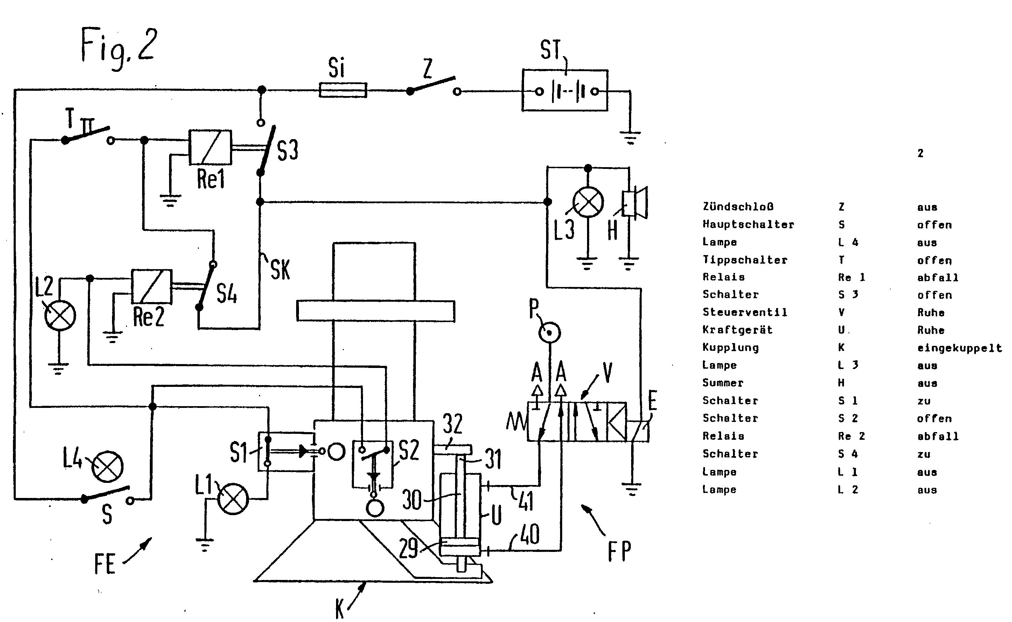

In Figur 2 erkennt man eine Fernbedienungseinrichtung, die einen pneumatischen Teil FP und einen elektrischen Teil FE umfaßt. Der pneumatische Teil FP besitzt ein Steuerventil, nämlich ein Mehrwegeventil V, das über die Leitungen 4O und 4I an das Kraftgerät U angeschlossen ist. Die Verriegelungsvorrichtung des Kraftgerätes U ist in Figure 2 der Einfachheit halber nicht eingezeichnet.

Der elektrische Teil der Fernbedienungseinrichtung umfaßt eine Stromversorgung ST, nämlich die kraftfahrzeugeigene Stromversorgung. An diese ist über das Zündschloß Z und eine Sicherung SI ein Fernbedienungs- und Anzeigeschaltkreis angeschlossen. Dieser Fernbedienungs- und Anzeigeschaltkreis umfaßt einen Hauptschalter S, eine Anzeigelampe L 4 zur Anzeige des Zustandes des Hauptschalters S, die Näherungsschalter S I und S 2, ein Relais Re I mit einem Selbsthaltekreis SK und einem Schalter S 3, ein weiteres Relais Re 2 mit einem Schalter S 4 in dem Selbsthaltekreis SK, einen Einkupplungsmelder, nämlich eine Einkupplungsmeldelampe L I in Reihe mit dem Näherungsschalter S I, einen Auskupplungsmelder, nämlich eine Auskupplungsmeldelampe L 2 in Reihe mit dem Näherungsschalter S 2, ein Betätigungsorgan T in Form eines Tippschalters, eine Erregerspule E für das Mehrwegeventil V sowie eine Aktivierungsmeldelampe L 3 und einen Aktivierungsmeldesummer H parallel zu der Erregerspule E.

In Figur 2 ist das Zündschloß Z ausgeschaltet und der Hauptschalter S ebenfalls ausgeschaltet. Die Anhängerkupplung befindet sich im Zustand "eingekuppelt", der Näherungsschalter S I ist geschlossen, der Näherungsschalter S 2 ist offen. Die Leitung 4O liegt an Atmosphäre A, die Leitung 4I liegt an Druckluft P. Die Meldelampen L I, L 2 und L 3 sind alle ausgeschaltet, der Summer H schweigt. Im einzelnen ergeben sich die Zustände sämtlicher hydraulischer und elektrischer Schaltelemente aus der Tabelle in Figur 2.

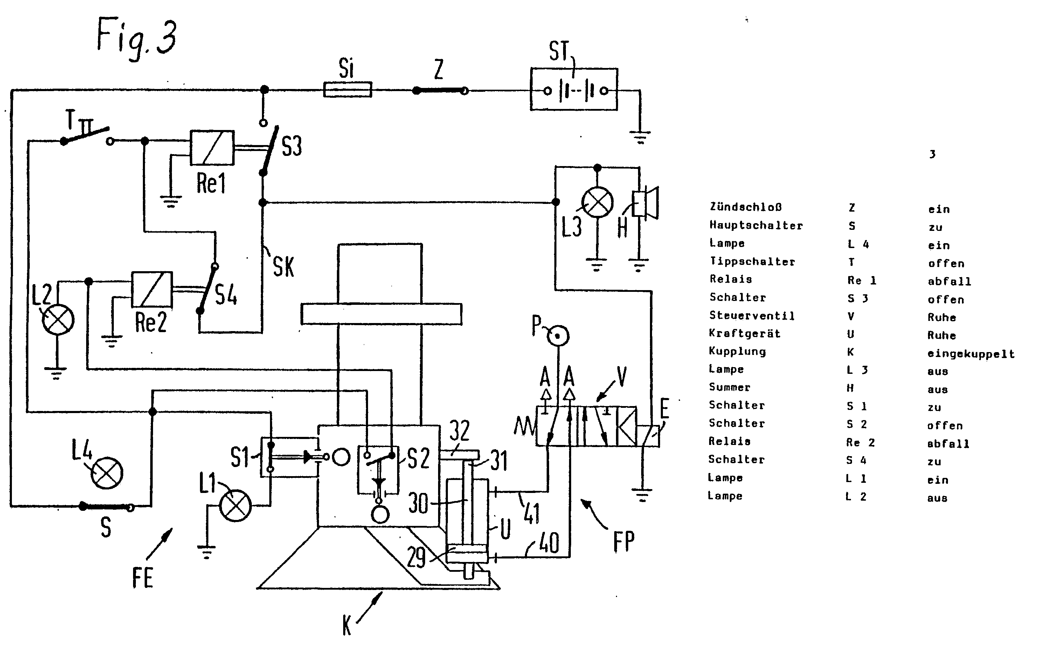

In Figur 3 ist das Zündschloß Z eingeschaltet und der Hauptschalter S geschlossen. Die Einkupplungsmeldelampe L I brennt und zeigt vorschriftsmäßig die Einkupplung an. Die Lampe L 4 brennt und zeigt an, daß die Fernbedienungs- und Anzeigeeinrichtung in Betrieb ist. Im übrigen sind alle Schaltzustände die gleichen wie in Figure 2, wie sich aus der Tabelle in Figur 3 ergibt.

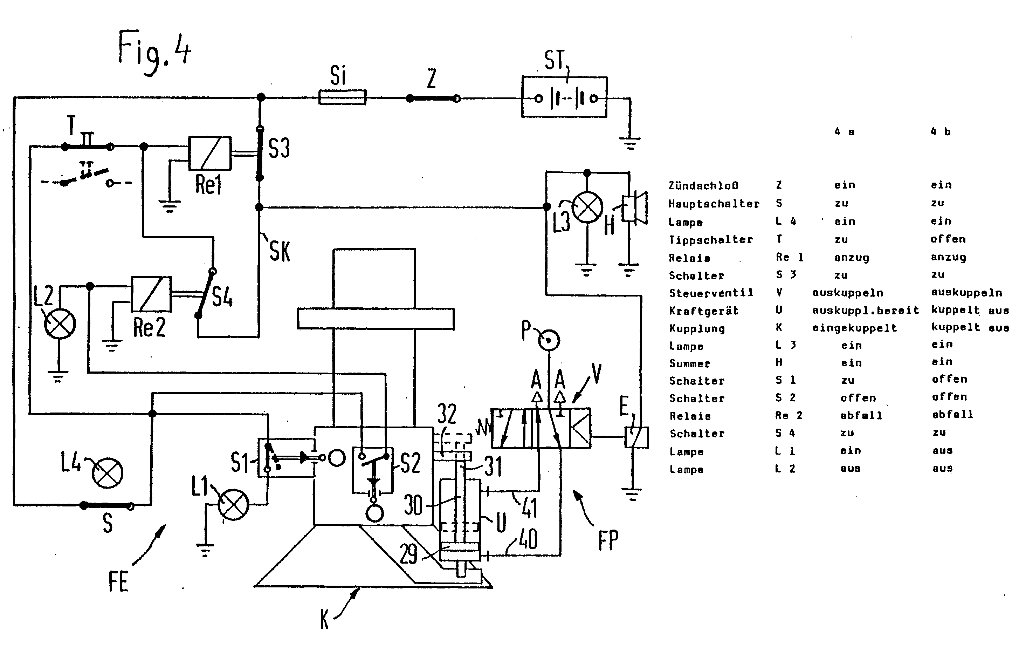

In Figur 4 ist der Tippschalter T gerade gedrückt. Das Relais Re I hat angezogen und der Schalter S 3 hat geschlossen. Da der Schalter S 4 bei abgefallenem Relais Re 2 ebenfalls geschlossen ist, ist der Selbsthaltekreis SK geschlossen und hält das Rel ais Re I erregt, das heißt angezogen, auch wenn der Tippschalter T in den gestrichelten Zustand übergeht. Solange der Selbsthaltekreis SK geschlossen ist, liegt an der Erregerspule E, an der Lampe L 3 und an dem Summer H Strom. Dies bedeutet, daß das Mehrwegeventil V in Auskuppelstellung gestellt ist, die Aktivierungsmeldelampe L 3 brennt und der Summer H summt. Das Kraftgerät U ist auskuppelbereit, hat aber (voll ausgezogene Position) noch nicht auszukuppeln begonnen. Der Näherungsschalter S I ist noch geschlossen, der Näherungsschalter S 2 ist noch offen. Im übrigen wird verwiesen auf die der Figur 4 zugehörigen Tabelle, und zwar auf die Spalte 4 a. In gestrichelten Linien ist in Figur 4 eingezeichnet, daß der Tippschalter T wieder losgelassen ist und das Kraftgerät U den Auskupplungsvorgang begonnen hat. Da der Auskupplungsvorgang noch nicht beendet ist, ist der Näherungsschalter S 2 nach wie vor offen und die Auskupplungsmeldelampe L 2 nach wie vor ausgeschaltet. Da aber der Näherungsschalter S I bereits teilweise geöffnet ist, ist die Einkupplungsmeldelampe L I erloschen. Es sind also sowohl die Einkupplungsmeldelampe als auch die Auskupplungsmeldelampe vorübergehend erloschen. Für diesen gestrichelt eingezeichneten Zwischenzustand wird wiederum auf die Tabelle zu Figur 4 verwiesen, und zwar auf die Spalte 4 b.

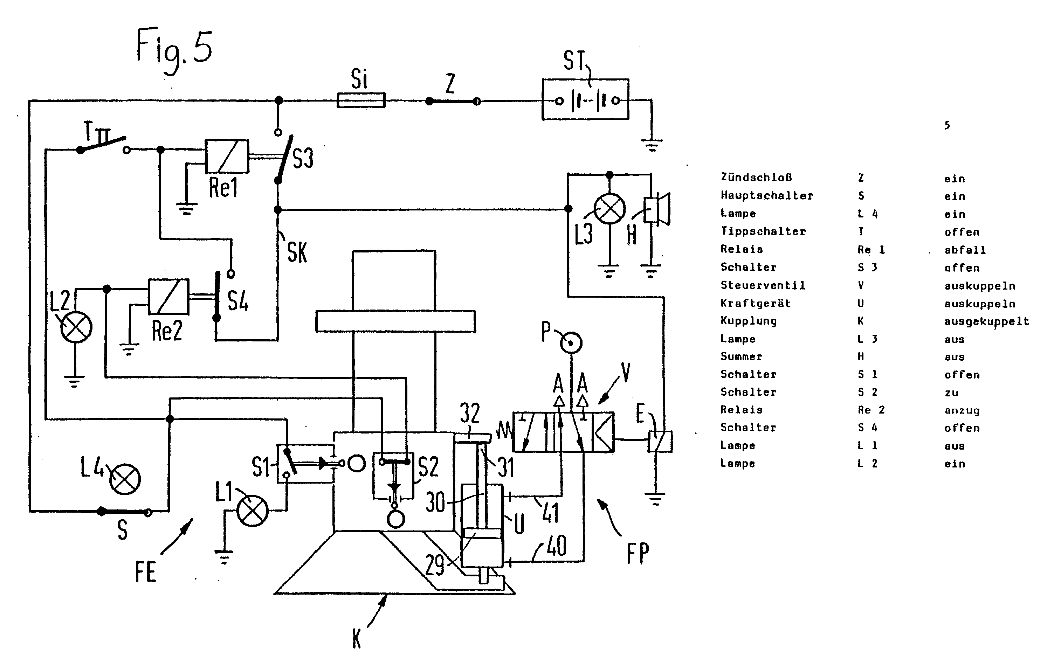

In Figur 5 hat das Kraftgerät U seinen vollen Hub durchlaufen. Die Anhängerkupplung K ist vollständig ausgekuppelt. Der Näherungsschalter S 2 ist geschlossen, der Näherungsschalter S I ist offen. Die Einkupplungsmeldelampe L I ist erloschen. Die Auskupplungsmeldelampe L 2 brennt. Über den Näherungsschalter S 2 ist das Relais Re 2 erregt und der Schalter S 4 geöffnet. Der Selbsthaltekreis SK des Relais Re I ist geöffnet. Die Erregerspule E ist aberregt. Die Aktivierungsmeldelampe L 3 ist erloschen. Der Summer H schweigt. Das Mehrwegeventil V ist noch nicht in seine Ruhestellung zurückgekehrt; auch das Kraftgerät U ist noch nicht in seine Ruhestellung zurückgekehrt. Im einzelnen wird auf die Tabelle zu Figur 5 verwiesen.

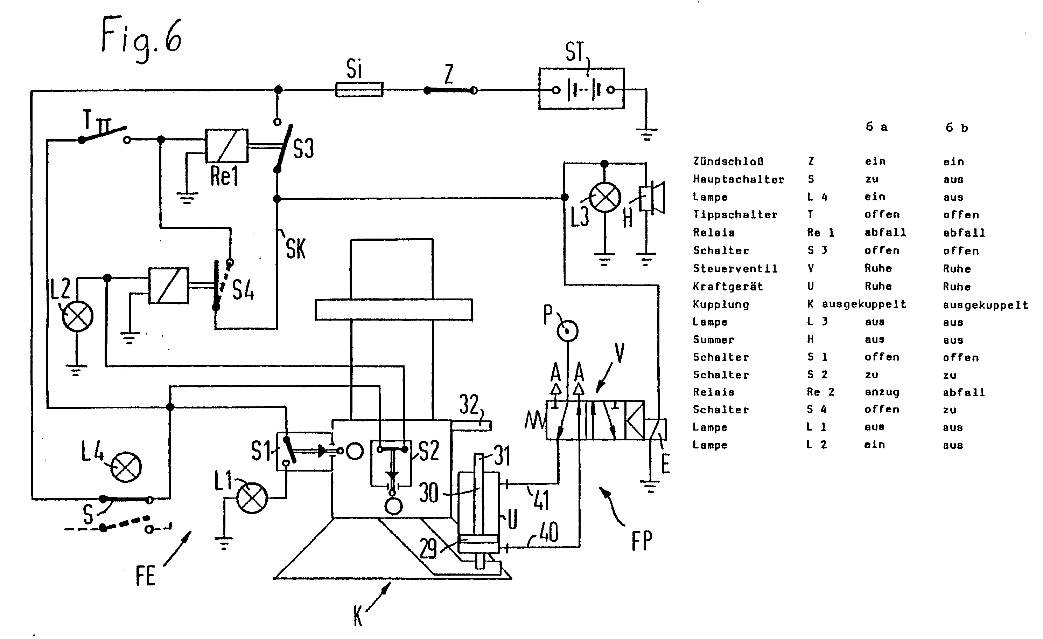

In Figur 6 (ausgezogene Linien) ist das Mehrwegeventil V in seine Ruhestellung zurückgekehrt und das Kraftgerät U ist ebenfalls in seine Ruhestellung zurückgekehrt. Die Anhängerkupplung K ist nach wie vor im Zustand "ausgekuppelt", die Auskupplungsmeldelampe L 2 brennt, die Einkupplungsmeldelampe L I ist erloschen. Die Aktivierungsmeldelampe L 3 ist nach wie vor erloschen und der Summer H schweigt. Im einzelnen wird verwiesen auf die Tabelle zu Figur 6, und zwar auf die Spalte 6 a. Gestrichelt ist eingezeichnet der Zustand, der sich ergibt, wenn der Hauptschalter S nach dem Auskuppeln ausgeschaltet wird. Hierzu wird auf die Tabelle 6 b zu Figur 6 verwiesen. Der Ausgangszustand gemäß Figur I wird, ausgehend vom Zustand der Figur 6, wieder erreicht, wenn, wie zu Figur I beschrieben, die Kupplungsöse 22 in das Kupplungsmaul 2O einfährt und der Kupplungsbolzen 2l in die Stellung "eingekuppelt" gemäß Figur l zurückfällt, indem dann der Näherungsschalter S 2 wieder geöffnet und der Näherungsschalter S l wieder geschlossen wird.

Der Zustand gemäß Figur 4, Tabelle 4 a, hält im allgemeinen nur für einen kurzen Augenblick an, da bei unbelasteter Anhängerkupplung der Übergang von der Stellung gemäß Figur 4, Tabelle 4 a, in den Zustand gemäß Figur 5, Tabelle 5, sehr rasch vor sich geht. Wenn aber gemäß Figur l die Anhängerkupplung K unter Zug steht, so ist unter Umständen das Kraftgerät U nicht in der Lage, die Reibung zwischen dem Kupplungsbolzen 2l und der Kupplungsöse 22 zu überwinden. Dann kann der Kolben 29 nur so weit nach oben gehen, bis der Auskupplungsvorsprung 3l an dem oberen Ende der Auskupplungskerbe 32 anstößt. Dann ist zwar das Verriegelungselement 23 aus der Verriegelungskerbe 24 ausgerückt. Ein Übergang des Kupplungsbolzens 2l in die Stellung "ausgekuppelt" ist aber nicht möglich. Dann ist der Näherungsschalter S l durch das Verriegelungselement 23 beziehungsweise den Schwenkhebel 25 geöffne t und der Näherungsschalter S 2 ist nach wie vor geöffnet. Die beiden Lampen, nämlich die Einkupplungsmeldelampe L l und die Auskupplungsmeldelampe L 2 sind erloschen. Da der Näherungsschalter S 2 nach wie vor offen ist, ist das Relais Re 2 nach wie vor abgefallen, das heißt, der Schalter S 4 hält den Haltekreis SK des Releais Re l nach wie vor geschlossen. Es liegt nach wie vor Spannung an der Erregerspule E, an der Aktivierungsmeldelampe L 3 und an dem Summer H. Der Fahrer erfährt also, daß der Auskupplungsvorgang nicht vollendet worden ist, und ist gehalten, durch Vor- und Zurückstoßen des Zugfahrzeugs die Anhängerkupplung K zu entlasten, so daß dann das Kraftgerät U den Auskupplungsvorgang vollenden kann. Sollte der Fahrer in diesem Zustand den Hauptschalter S ausschalten, um die Aktivierungsmeldelampe L 3 und den Summer H zu unterdrükken, so gelingt dies nicht, weil der Selbsthaltekreis SK des Relais Re l an die Stromversorgung vor dem Hauptschalter S angeschlossen ist. Es kann also nicht eintreten, daß der Fahrer nach Ausschalten des Hauptschalters S losfährt, obwohl die Anhängerkupplung entriegelt, aber nicht ausgekuppelt ist. Erst wenn das Zündschloß Z ausgeschaltet wird, hört auch die Aktivierungsmeldelampe L 3 und der Summer H zu melden auf. Dann ist aber auch die Erregerspule E abgefallen und das Mehrwegeventil V kehrt in seinen Ruhezustand zurück, indem es nicht mehr auskuppeln will. Wenn der Fahrer dann wieder das Zündschloß Z ausschaltet, so ist er laut Vorschrift gezwungen, zunächst wieder den Kupplungszustand zu prüfen und wird dann faststellen, daß die Kupplung weiterhin weder eingekuppelt noch ausgekuppelt ist, sondern sich in einem Übergangszustand befindet.

Wenn der Fahrer losfahren will und vorschriftsgemäß den Zustand der Anhängerkupplung überprüfen will, so kann er dies durch Einschalten des Hauptschalters S jederzeit tun. Befindet sich die Anlage im Zustand der Figur 2, so leuchtet beim Schließen des Hauptschalters S lediglich die Einkupplungsmeldelampe L l auf. Solange der Tippschalter T offen bleibt, findet auch keine Einleitung eines Auskupplungsvorganges statt. Findet die Überprüfung vor dem Losfahren im Zustand gemäß Figur 6, Tabelle 6 b, statt, so wird wiederum der Hauptschalter S geschlossen. Da der Näherungsschalter S 2 ebenfalls geschlossen ist, zeigt die Lampe L 2 "ausgekuppelt" an. Es wird dann auch die Erregerspule E und parallel zu ihr die Aktivierungsmeldelampe L 3 sowie der Summer H erregt. Es tritt aber keine Veränderung an der Anhängerkupplung ein, da sich diese ja ohnehin in dem Zustand "ausgekuppelt" befindet.

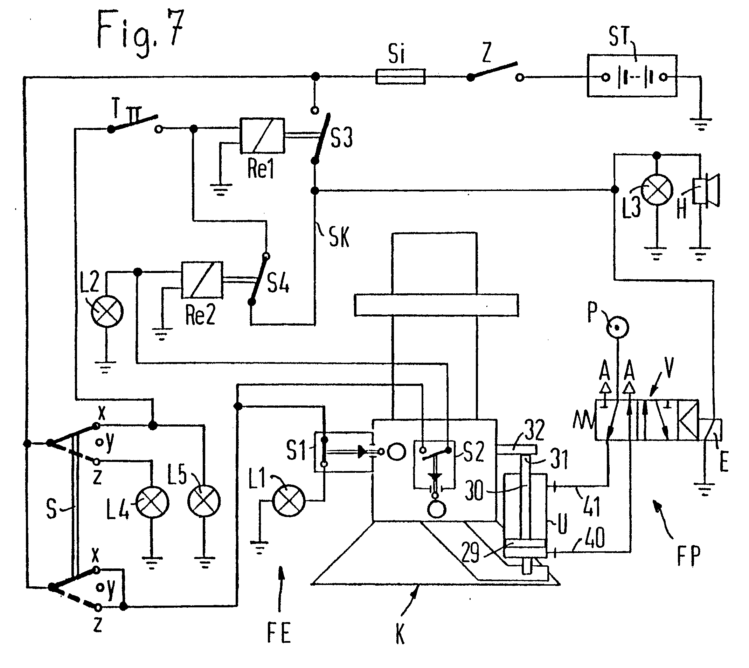

In Figur 7 ist eine abgewandelte Schaltung dargestellt, mit der es folgende Bewandnis hat. Der Hauptschalter S ist zu einem Drei-Stufen-Schalter modifiziert. In der Stellung "x" des Zwei-Stufen-Schalters ist sowohl eine Anzeige durch die Einkupplungsmeldelampe L l und - je nach Zustand - durch die Auskupplungsmeldelampe L 2 als auch eine Fernbedienung im Sinne des Auskuppelns möglich. In der Schaltstellung "z" ist nur eine Anzeige durch die Einkupplungsmeldelampe L l beziehungsweise - je nach Zustand - durch die Auskupplungsmeldelampe L 2 möglich. Der Tippschalter T ist aber dann von der Stromversorgung getrennt und eine Fernbedienung im Sinne des Auskuppelns ist nicht möglich. Dies hat den Vorteil, daß ein Unbefugter nicht den Tippschalter betätigen kann, während der Fahrer den Schalter S zum Zwecke der Prüfung des Kupplungszustandes in die Schaltstellung "z" bringt. Die Lampe L 5 zeigt an, wenn die Anlage auf Kupplungszustands-Überprüfung und Fernbedienung geschaltet ist, während die Lampe L 4 anzeigt, wenn die Anlage nur auf Überprüfungszustand geschaltet ist.

## Ansprüche

1. Ankupplungseinrichtung bei Kraftfahrzeugen zum Ankuppeln eines Nachlauffahrzeuges an ein Zugfahrzeug, insbesondere Anhängerkupplung oder Sattelkupplung, welche durch äußere Krafteinwirkung los bar und durch Annäherung von Kupplungseinrichtungsteilen (2O, 22) der beiden zu kuppelnden Fahrzeuge einzukuppeln ist, wobei zur Einleitung des Auskuppelns der Ankupplungseinrichtung ein Kraftgerät (U) vorgesehen ist und wobei zum Aktivieren des Kraftgerätes (U) eine Fernbedienungseinrichtung (FE, FP) mit einem Handbetätigungsorgan (T) vorgesehen ist, dadurch gekennzeichnet, daß ein den Zustand "ausgekuppelt" der Ankupplungseinrichtung erfassender Auskupplungssensor (S 2) vorgesehen ist sind daß die Fernbedienungseinrichtung (FE, FP) selbsthaltend in dem Sinne ausgebildet ist, daß sie unabhängig von der Handbetätigung des Handbetätigungsorgans (T) aktiviert bleibt und die Kraftwirkung des Kraftgerätes (U) im aufrechterhält, bis der Auskupplungssensor (S 2) den Zustand "ausgekuppelt" der Ankupplungseinrichtung ermittelt.

2. Ankupplungseinrichtung nach Anspruch 1, dadurch gekennzeichnet, daß die Fernbedienungseinrichtung (FE,FP) mit einem Melder (L3,H, L2) gekoppelt ist, welcher gesteerest durch den Auskupplungssensor (S 2) den Eintrittdes Zustands "ausgekuppelt" der Ankupplungseinrichtung meldet.

3. Ankupplungseinrichtung nach Anspruch 1 oder 2 dadurch gekennzeichnet, daß die Fernbedienungseinrichtung (FE, FP) mit einem Aktivierungsmelder (L 3, H) gekoppelt ist, welcher ein Aktivierungsmeldesignal liefert, vom Zeitpunkt des Aktivierungsbeginns des Handbetätigungsorgans (T) bis zu dem Zeitpunkt, zu dem der Auskupplungssensor (S 2) den Zustand "ausgekuppelt" der Ankupplungseinrichtung ermittelt.

4. Ankupplungseinrichtung nach einem der Ansprüche 1-3, dadurch gekennzeichnet, daß das Handbetätigungsorgan (T) monostabil ist, zum Beispiel in Form eines Druckknopfes.

5. Ankupplungseinrichtung nach einem der Ansprüche 1 bis 4 dadurch gekennzeichnet, daß ein Einkupplungsmelder (L 1) vorgesehen ist, welcher ein Einkupplungsmeldesignal liefert, wenn ein Einkupplungssensor (S 1) den Zustand "eingekuppelt" und - gegebenenfalls - "verriegelt" ermittelt, und daß ferner ein Auskupplungsmelder (L 2) vorgesehen ist, welcher ein Auskupplungsmeldesignal liefert, wenn der Auskupplungssensor (S 2) den Zustand "ausgekuppelt" ermittelt.

6. Ankupplungseinrichtung nach Anspruch 5, dadurch gekennzeichnet, daß der Einkupplungsmelder (L I) und der Auskupplungsmelder (L 2) Meldelampen sind, von denen bei ordnungsgemäßem Zustand der Anlage in beiden Zuständen "eingekuppelt" und "ausgekuppelt" der Ankupplungseinrichtung jeweils eine brennt und die andere nicht brennt.

7. Ankupplungseinrichtung nach einem der Ansprüche I bis 6, dadurch gekennzeichnet, daß ein dem Zündschloß (2) des Kraftfahrzeuges nachgeschalteter Hauptschalter (S) für die Fernbedienungseinrichtung (FE, FP) vorgesehen ist.

8. Ankupplungseinrichtung nach Anspruch 7, dadurch gekennzeichnet, daß der Aktivierungsmelder (L 3, H) von dem Hauptschalter (S) unabhängig ist in dem Sinne, daß er nach teilweiser Auskupplung, etwa nach bloßer Entriegelung, auch bei ausgeschaltetem Hauptschalter (S) weiterhin das Aktivierungsmeldesignal liefert.

9. Ankupplungseinrichtung nach einem der Ansprüch 1-8, dadurch gekennzeichnet, daß der Aktivierungsmelder (L 3, H) optisch und/oder akustisch meldet.

10. Ankupplungseinrichtung nach einem der Ansprüche 5 bis 9, dadurch gekennzeichnet, daß der Einkupplungsmelder (L I) und der Auskupplungsmelder (L 2) von der Fernbedienungseinrichtung (FE, FP) insoweit getrennt oder trennbar sind, daß eine Überprüfung des Kupplungszustandes möglich ist, ohne daß gleichzeitig die Fernbedienungseinrichtung (FE, FP) aktivierbar ist.

11. Ankupplungseinrichtung nach Anspruch 10, dadurch gekennzeichnet, daß der Hauptschalter (S) ein Drei-Positionen-Schalter ist, welcher in einer ersten Position (x) die Aktivierung der Fernbedienungseinrichtung und gleichzeitig die Überprüfung des Kupplungszustandes ("eingekuppelt" oder "ausgekuppelt") ermöglicht, in einer zweiten Position lediglich die Überprüfung des Kupplungszustandes ("ausgekuppelt" oder "eingekuppelt") ermöglicht, und in einer dritten Position sowohl die Fern bedienungseinrichtung (FE, FP) als auch die Überprüfung des Kupplungszustandes ("eingekuppelt" oder "ausgekuppelt") unterdrückt.

12. Ankupplungseinrichtung nach einem der Ansprüche 1 bis 11, dadurch gekennzeichnet, daß das Kraftgerät (U) ein pneumatisches Kraftgerät ist.

13. Ankupplungseinrichtung nach einem der Ansprüche I bis 12, dadurch gekennzeichnet, daß mindestens einer der Sensoren (Auskupplungssensor (S 2), Einkupplungssensor (S l) von kapazitiven oder induktiven Näherungsschaltern gebildet ist.

14. Ankupplungseinrichtung nach einem der Ansprüche l bis 13, dadurch gekennzeichnet, daß die Fernbedienungseinrichtung (FE, FP) mit einer elektrischen Relaisschaltung aufgebaut ist, mit einem Selbsthalterelais (Re l), welches bei kurzzeitiger Betätigung des Betätigungsorgans (T) in den Selbsthaltezustand übergeht und damit die Aktivierung der Fernbedienungseinrichtung (FE, FP) aufrechterhält, wobei in einem Selbsthaltekreis (SK) des Selbsthalterelais ein durch ein weiteres Relais (Re 2) betätigter Schalter (S 4) liegt, der bei Ermittlung des Zustandes "ausgekuppelt" durch den Auskupplungssensor (S 2) den Selbsthaltekreis (SK) unterbricht.

15. Ankupplungseinrichtung nach einem der Ansprüche l bis 14, dadurch gekennzeichnet, daß bei Ausführung mit einem Kupplungselement (2l) (zum Beispiel Kupplungsbolzen (2l)) und einem Verriegelungselement (23) das Kraftgerät (U) zeitlich nacheinander zuerst das Verriegelungselement (23) löst und hierauf das Kupplungselement (2l) in eine Stellung "ausgekuppelt" überführt und daß der Einkupplungssensor (S l) auf die Stellung des Verriegelungselements (23) anspricht, während der Auskupplungssensor (S 2) auf die Stellung des Kupplungselements (2l) anspricht.

16. Ankupplungseinrichtung nach einem der Ansprüche l bis 15, dadurch gekennzeichnet, daß sie in dem Zustand "ausgekuppelt" verrastbar ist und daß das Kraftgerät (U) in eine Ruhestellung zurückführbar ist, sobald der Auskupplungssensor (S 2) den Zustand "ausgekuppelt" ermittelt.

17. Ankupplungseinrichtung bei Kraftfahrzeugen zum Ankuppeln eines Nachlauffahrzeuges an ein Zugfahrzeug, insbesondere Anhängerkupplung oder Sattelkupplung, welche durch äußere Krafteinwirkung los Bar und durch Annäherung von Kupplungseinrichtungsteilen (20, 22) der beiden zu kuppelnden Fahrzeuge einzukuppeln ist, wobei zum Auskuppeln der Ankupplungseinrichtung eine zur Ausübung einer Betätigungskraft auf die Ankupplungseinrichtung ausgebildete Fernbedienungseinrichtung (FE, FP) mit einem Handbetätigungsorgan (T) vorgesehen ist, dadurch gekennzeichnet, daß ein Einkupplungsmelder (L 1) vorgesehen ist, welcher ein Einkupplungsmeldesignal liefert, wenn ein Einkupplungssensor (S 1) den Zustand "eingekuppelt" und - gegebenenfalls - "verriegelt" ermittelt, und daß ferner ein Auskupplungsmelder (L 2) vorgesehen ist, welcher ein Auskupplungsmeldesignal liefert, wenn der Auskupplungssensor (S 2) den Zustand "ausgekuppelt" ermittelt.

18. Ankupplungseinrichtung nach Anspruch 17, dadurch gekennzeichnet, daß der Einkupplungsmelder (L 1) und der Auskupplungsmelder (L 2) Meldelampen sind, von denen bei ordnungsgemäßem Zustand der Anlage in beiden Zuständen "eingekuppelt" und "ausgekuppelt" der Ankupplungseinrichtung jeweils eine brennt und die andere nicht brennt.

## Claims

1. A coupling means for motor vehicles, for coupling a trailer vehicle to a tractor vehicle, particularly a trailer coupling or saddle coupling which is separable by the application of an external force and which can be coupled by the bringing together of coupling means parts (20, 22) on the two vehicles which are to be coupled, uncoupling of the coupling arrangement being initiated by a power unit (U), a remote control device (FE, FP) with a hand actuating means (T) being provided for activating the power unit (U), characterised in that there is provided an uncoupling sensor (S2) which detects the "uncoupled" condition of the coupling arrangement and in that the remote control device (FE, FP) is constructed to be self-supporting in that it remains activated independently of manual activation of the manual activating device (T), the effect of the force from the power unit (U) being maintained in the uncoupled direction until the uncoupling sensor (S2) ascertains the "uncoupled" condition of the coupling means.

2. A coupling means according to Claim 1, characterised in that the remote control device (FE, FP) is coupled to a relay (L3, H, L2) which, controlled by the coupling sensor (S2) gives warning of the onset of the "uncoupled" status of the coupling means.

3. A coupling means according to Claim 1 or 2, characterised in that the remote control device (FE, FP) is coupled to an activating alarm (L3, H) which delivers an activation signal from the moment when activation of the manual actuating means (T) commences until the moment when the uncoupling sensor (S2) detects the "uncoupled" condition of the coupling means.

4. A coupling means according to one of Claims 1 to 3, characterised in that the manual actuating member (T) is monostable, and is for example in the form of a push-button.

5. A coupling means according to one of Claims 1 to 4, characterised in that the coupling alarm (L1) is provided which delivers a coupling signal when a coupling sensor (S1) detects the "coupled" status and possibly the "locked" status, and in that furthermore there is an uncoupling alarm (L2) which delivers an uncoupling signal when the uncoupling sensor (S2) detects the "uncoupled" condition.

6. A coupling means according to Claim 5, characterised in that the coupling alarm (L1) and the uncoupling alarm (L2) are warning lamps of which, when the installation is operating properly in both the "coupled" and "uncoupled" conditions of the coupling means, one will always be illuminated while the other is not.

7. A coupling means according to one of Claims 1 to 6, characterised in that a main switch (S) is provided for the remote control device (FE, FP) and is downstream of the ignition lock (2) of the motor vehicle.

8. A coupling means according to Claim 7, characterised in that the activating alarm (L3, H) is independent of the main switch (S) in the sense that after partial uncoupling, substantially after purely unlocking, it continues to deliver the activation signal even when the main switch (S) is switched off.

9. A coupling means according to one of Claims 1 to 8, characterised in that the activation alarm (L3, H) operates visually and/or acoustically.

10. A coupling means according to one of Claims 5 to 9, characterised in that the coupling alarm (L1) and the uncoupling alarm (L2) can by the remote control device (FE, FP) be sufficiently separated that it is possible to check the coupling condition without the remote control device (FE, FP) being capable of being activated at the same time.

11. A coupling means according to Claim 10, characterised in that the main switch (S) is a three-position switch which, in a first position (x) permits activation of the remote control device and at the same time checking of the coupling status ("coupled" or "uncoupled") while in the second position it permits only checking of the coupling status ("uncoupled" or "coupled"), and in a third position it suppressed both the remote control means (FE, FP) and also checking of the coupling status ("coupled" or "uncoupled").

12. A coupling means according to one of Claims 1 to 11, characterised in that the power unit (U) is a pneumatic power unit.

13. A coupling means according to one of Claims 1 to 12, characterised in that at least one of the sensors (uncoupling sensor S2, coupling sensor S1) is formed by capacitative or inductive proximity switches.

14. A coupling means according to one of Claims 1 to 13, characterised in that the remote control device (FE, FP) is built up with an electrical relay circuit, with a self-latching relay (Re1) which, upon brief actuation of the actuating member (T), merges into the self-latching condition, so that activation of the remote control means (FE, FP) is maintained, whereby in a self-latching circuit (SK) of the self-latching relay there is, actuated by a further relay (Re2) a switch (S4) which, upon detecting the "uncoupled" condition, breaks the self-latching circuit (SK) by the uncoupling sensor (S2).

15. A coupling means according to one of Claims 1 to 14, characterised in that in an embodiment with a coupling element (21) (for example a coupling pin (21)) and a locking element (23) the power unit (U) released in sequence one after another, firstly the locking element (23) and then the coupling element (21) which moves into an "uncoupled" position and in that the coupling sensor (S1) responds to the position of the locking element (23) while the uncoupling sensor (S2) responds to the position of the coupling element (21).

16. A coupling means according to one of Claims 1 to 15, characterised in that it can be locked in the "uncoupled" status and in that the power unit (U) can be returned to an inoperative position as soon as the uncoupling sensor (S2) detects the "uncoupled" condition.

17. A coupling means for motor vehicles for coupling a trailer vehicle to a tractor vehicle, particularly a trailer coupling or saddle coupling which is separable by the application of an external force and which can be coupled by the bringing together of coupling means parts (20, 22) on the two vehicles which are to be coupled, whereby for uncoupling the coupling means a remote control device (FE, FP) with a manual actuating member (T) is provided, characterized in that a coupling alarm (L1) is provided which delivers a coupling signal when a coupling sensor (S1) detects the "coupled" and - possibly - a "locked" condition and in that furthermore an uncoupling alarm (L2) is provided which delivers an uncoupling signal when the uncoupling sensor (S2) detects the "uncoupled" condition.

18. A coupling means according to Claim 17, characterised in that the coupling alarm (L1) and the uncoupling alarm (L2) are warning lamps of which, when the installation is in proper condition, and in either of the two "coupled" or "uncoupled" conditions of the coupling means, always one lamp will be burning while the other is not burning.

**Revendications**

1. Dipositif d'attelage de véhicules automobiles pour l'attelage d'un véhicule tracté à un véhicule tracteur, notamment attelage de remorque ou de semiremorque, qui peut être accouplé de manière amovible sous l'effet d'une force extérieure et par rapprochement de parties du dispositif d'attelage (20, 22) des deux véhicules à atteler, dans lequel il est prévu une source de force (U) pour amorcer le désaccouplement du dispositif d'attelage et un dispositif de télécommande (FE, FP) avec un organe d'actionnement manuel (T), pour activer la source de force (U), caractérisé en ce qu'il est prévu un capteur de désaccouplement (S2) enregistrant l'état "désaccouplé" du dispositif d'attelage et en ce que le dispositif de télécommande (FE, FP) est à auto-entretien, en ce sens qu'il reste activé indépendamment de l'actionnement manuel de l'organe d'actionnement manuel (T) et maintient l'action de la force de la source de force (U) dans le sens non attelé jusqu'à ce que le capteur de désaccouplement (s2) détecte l'état "désaccouplé" du dispositif d'attelage.

2. Dispositif d'attelage selon la revendication 1, caractérisé en ce que le dispositif de télécommdnde (FE, FP) est couplé à un avertisseur (L3, H, L2) qui, commandé par le capteur de désaccouplement (52), signale l'entrée dans l'état "désaccouplé" du dispositif d'attelage.

3. Dispositif d'attelage selon la revendication 1 ou 2, caractérisé en ce que le dispositif de télécommande (FE, FP) est couplé a un avertisseur d'activation (L3, H) qui fournit un signal d'activation, depuis l'instant du début de l'activation de l'organe d'actionnement manuel (T) jusqu'à l'instant auquel le capteur de désaccouplement (S2) détecte l'état "désaccouplé" du dispositif d'attelage.

4. Dispositif d'attelage selon l'une des revendications 1 a 3, caractérisé en ce que l'organe d'actionnement manuel (T) est monostable, par exemple sous la forme d'un bouton-poussoir.

5. Dispositif d'attelage selon l'une des revendication 1 à 4, caractérisé en ce qu'il est prévu un avertisseur d'attelage (L1) qui fournit un signal d'attelage lorsqu'un capteur d'attelage (s1) détecte l'état "attelé" et - éventuellentent - "verrouillé" et en ce qu'il est prévu en outre un avertisseur de désaccouplement (L2) qui fournit un signal de désaccouplement lorsque le capteur de désaccouplement (S2) détecte l'état "désaccouplé".

6. Dispositif d'attelage selon la revendication 5, caractérisé en ce que l'avertisseur d'attelage (L1) et l'avertisseur de désaccouplement (L2) sont des lampes témoins dont l'une est toujours allumée tandis que l'autre est éteinte pendant le fonctionnement correct de l'installation, dans les deux états "attelé" et "désaccouplé" du dispositif d'attelage.

7. Dispositif d'attelage selon l'une des revendications 1 à 6, caractérisé en ce qu'il est prévu un interrupteur principal (S) pour le dispositif de télécommande (FE, FP), monté en aval de la serrure de contact (2) du véhicule automobile.

8. Dispositif d'attelage selon la revendication 7, caractérisé en ce que l'avertisseur d'activation (L3, H) est indépendant de l'interrupteur principal (S) en ce sens qu'après désaccouplement partiel, par exemple après simple déverrouillage, il continue de fournir le signal d'activation, même lorsque l'interrupteur principal (S) est coupé.

9. Dispositif d'attelage selon l'une des revendications I à 8, caractérisé en ce que l'avertisseur d'activation (L3, H) est optique et/ou acoustique.

10. Dispositif d'attelage selon l'une des revendications 5 à 9, caractérisé en ce que l'avertisseur d'attelage (L1) et l'avertisseur de désaccouplement (L2) sont séparés ou peuvent être séparés du dispositif de télécommande (FE, FP) par le fait qu'une vérification de l'état d'accouplement est possible, sans qu'en même temps le dispositif de télécommande (FE, FP) soit activable.

11. Dispositif d'attelage selon la revendication 10, caractérisé en ce que l'interrupteur principal (S) est un interrupteur à trois positions qui dans une première position (x) permet l'activation du dispositif de télécommande et en même temps la vérification de l'état ("attelé" ou "désaccouplé"), dans une deuxième position permet uniquement la vérification de l'état d'accouplement ("désaccouplé'" ou "attelé") et dans une troisième Position interdit le dispositif de télécommande (FE, FP) ainsi que la vérification de l'état d'accouplement ("attelé" ou "désaccouplé").

12. Dispositif d'attelage selon l'une des revendications 1 a 11, caractérisé en ce que la source de force (U) est une source pneumatique

13. Dispositif d'attelage selon l'une des revendications 1 à 12, caractérisé en ce que l'un des capteurs au moins (capteur de désaccouplement (S2), capteur d'attelage (S1) est formé par des interrupteurs de proximité capacitifs ou inductifs.

14. Dispositif d'attelage selon l'une des revendications 1 à 13, caractérisé en ce que le dispositif de télécommande (FE, Fp) comprend un circuit de relais électrique avec un relais à auto-entretien (Re 1) qui, lorsque l'organe d'actionnement (T) est brièvement actionné, passe dans la position d'auto-entretien et maintient ainsi l'activation du dispositif de télécommande (FE, F2), un interrupteur (S4) actionné par un autre relais (Re 2) étant monté dans un circuit d'auto-entretien (SK) du relais à auto-entretien et coupant le circuit d'autoentretien (SK) lorsque le capteur de désaccouplement (S2) détecte l'état "désaccouplé".

15. Dispositif d'attelage selon l'une des revendications 1 à 14, caractérisé en ce que dans le cas d'une réalisation avec un élément d'attelage (21) (par exemple boulon d'attelage (21) et un élément de verrouillage (23), la source de force (U) libère successivement dans le temps l'élément de verrouillage (23) puis fait passer l'élément d'attelage (21) dans une position "désaccouplé" et en ce que le capteur d'attelage (S1) réagit à la position de l'élément de verrouillage (23), tandis que le capteur de désaccouplement (S2) réagit à la position de l'élément d'attelage (21).

16. Dispositif d'attelage selon l'une des revendications 1 à 15, caractérisé en ce qu'il peut être bloqué à l'état "désaccouplé" et en ce que la source de force (U) peut être replacé dans une position de repos dès que le capteur de désaccouplement (S2) détecte l'état "désaccouplé".

17. Dispositif d'attelage de véhicules automobiles pour l'attelage d'un véhicule tracté à un véhicule tracteur, notamment attelage de remorque ou de semi-remorque, qui peut être accouplé de manière amovible sous l'effet d'une force extérieure et accouplé par rapprochement de parties du dispositif d'attelage (20, 22) des deux véhicules à atteler, dans lequel un dispositif de télécommande (FE, Fp), conçu pour exercer une force d'actionnement sur le dispositif d'attelage et comportant un organe d'actionnement manuel (T), est prévu pour désaccoupler le dispositif d'attelage, caractérisé en ce qu'il est prévu un avertisseur d'attelage (L1) qui fournit un signal d'attelage lorsqu'un capteur d'attelage (S1) détecte l'état "attelé" et - éventuellement - "verrouillé" et en ce qu'il est prévu en outre un avertisseur de désaccouplement (L2) qui fournit un signal de désaccouplement lorsque le capteur de désaccouplement (S2) détecte l'état "désaccouplé".

18. Dispositif d'attelage selon la revendication 17, caractérisé en ce que l'avertisseur d'attelage (L1) et l'avertisseur de désaccouplement (L2) sont des lampes témoins dont l'une est toujours allumée tandis que l'autre est éteinte pendant le fonctionnement correct de l'installation, dans les deux états "attelé" et "désaccouplé" du dispositif d'attelage.

Fig.1

# Fig. 2

EP 0 232 898 B1

| | | |
|---|---|---|
| Zündschloß | Z | aus |
| Hauptschalter | S | offen |
| Lampe | L 4 | aus |
| Tippschalter | T | offen |
| Relais | Re 1 | abfall |
| Schalter | S 3 | offen |
| Steuerventil | V | Ruhe |
| Kraftgerät | U | Ruhe |
| Kupplung | K | eingekuppelt |
| Lampe | L 3 | aus |
| Summer | H | aus |
| Schalter | S 1 | zu |
| Schalter | S 2 | offen |
| Relais | Re 2 | abfall |
| Schalter | S 4 | zu |
| Lampe | L 1 | aus |
| Lampe | L 2 | aus |

**Fig. 3**

EP 0 232 898 B1

| | | |
|---|---|---|
| Zündschloß | Z | ein |
| Hauptschalter | S | zu |
| Lampe | L 4 | ein |
| Tippschalter | T | offen |
| Relais | Re 1 | abfall |
| Schalter | S 3 | offen |
| Steuerventil | V | Ruhe |
| Kraftgerät | U | Ruhe |
| Kupplung | K | eingekuppelt |
| Lampe | L 3 | aus |
| Summer | H | aus |
| Schalter | S 1 | zu |
| Schalter | S 2 | offen |
| Relais | Re 2 | abfall |
| Schalter | S 4 | zu |
| Lampe | L 1 | ein |
| Lampe | L 2 | aus |

# Fig.4

| | | 4 a | 4 b |
|---|---|---|---|
| Zündschloß | Z | ein | ein |
| Hauptschalter | S | zu | zu |
| Lampe | L 4 | ein | ein |
| Tippschalter | T | zu | offen |
| Relais | Re 1 | anzug | anzug |
| Schalter | S 3 | zu | zu |
| Steuerventil | V | auskuppeln | auskuppeln |
| Kraftgerät | U | auskuppl.bereit | kuppelt aus |
| Kupplung | K | eingekuppelt | kuppelt aus |
| Lampe | L 3 | ein | ein |
| Summer | H | ein | ein |
| Schalter | S 1 | zu | offen |
| Schalter | S 2 | offen | offen |
| Relais | Re 2 | abfall | abfall |
| Schalter | S 4 | zu | zu |
| Lampe | L 1 | ein | aus |
| Lampe | L 2 | aus | aus |

EP 0 232 898 B1

# Fig.5

| | | |
|---|---|---|
| Zündschloß | Z | ein |
| Hauptschalter | S | ein |
| Lampe | L 4 | ein |
| Tippschalter | T | offen |
| Relais | Re 1 | abfall |
| Schalter | S 3 | offen |
| Steuerventil | V | auskuppeln |
| Kraftgerät | U | auskuppeln |
| Kupplung | K | ausgekuppelt |
| Lampe | L 3 | aus |
| Summer | H | aus |
| Schalter | S 1 | offen |
| Schalter | S 2 | zu |
| Relais | Re 2 | anzug |
| Schalter | S 4 | offen |
| Lampe | L 1 | aus |
| Lampe | L 2 | ein |

EP 0 232 898 B1

# Fig.6

EP 0 232 898 B1

| | | 6 a | 6 b |
|---|---|---|---|
| Zündschloß | Z | ein | ein |
| Hauptschalter | S | zu | aus |
| Lampe | L 4 | ein | aus |
| Tippschalter | T | offen | offen |
| Relais | Re 1 | abfall | abfall |
| Schalter | S 3 | offen | offen |
| Steuerventil | V | Ruhe | Ruhe |
| Kraftgerät | U | Ruhe | Ruhe |
| Kupplung | K | ausgekuppelt | ausgekuppelt |
| Lampe | L 3 | aus | aus |
| Summer | H | aus | aus |
| Schalter | S 1 | offen | offen |
| Schalter | S 2 | zu | zu |
| Relais | Re 2 | anzug | abfall |
| Schalter | S 4 | offen | zu |
| Lampe | L 1 | aus | aus |
| Lampe | L 2 | ein | aus |

# Fig. 7

EP 0 232 898 B1